# EUROPÄISCHE PATENTSCHRIFT

(11) **EP 0 592 913 B1**
(45) Veröffentlichungstag und Bekanntmachung des Hinweises auf die Patenterteilung: **02.01.1997**
(21) Anmeldenummer: 93115987.5
(22) Anmeldetag: 04.10.1993
(51) Int. Cl.: C09J 7/00, C09D 5/20

(54) **Verwendung eines Copolymerisats aus alpha-Olefinen und ungesättigten, unpolaren Comonomeren als haftende Oberflächenschutzfolie**
Use of copolymer of alpha-olefins and unsaturated nonpolar comonomer as surface protecting sheet
Utilisation de copolymère des alpha-oléfines et des comonomères insaturés apolaires comme feuille de protection de surface

(30) Priorität: 15.10.1992 DE 4234712
(43) Veröffentlichungstag der Anmeldung: 20.04.1994
(73) Patentinhaber: BASF Aktiengesellschaft, 67063 Ludwigshafen (DE)
(72) Erfinder: Joest, Bernd, D-69518 Absteinach (DE); Muenstedt, Helmut, Dr., D-67157 Wachenheim (DE)

(56) Entgegenhaltungen:
- DE-A- 1 925 414
- DE-A- 2 013 158
- DATABASE WPI Week 9105, Derwent Publications Ltd., London, GB; AN 91-032060[05] & JP-A-2 300 281 (KANSAI PAINT) 12. Dezember 1990

## Beschreibung

Die vorliegende Erfindung betrifft die Verwendung eines Copolymerisats aus C₂- bis C₁₀-α-Olefinen und 5 bis 80 Gew.-%, bezogen auf das Copolymerisat, von ungesättigten, polaren Comonomeren als haftende Oberflächenschutzfolie beim Transport von Automobilen.

Nach der heutigen Praxis werden neu produzierte Automobile nach Abschluß der Lackierarbeiten mit einem Transportschutz versehen, der gewährleistet, daß während des Transportes vom Produzenten zum Händler eine Beschädigung des Fahrzeuglackes durch Kratzer oder durch Umwelteinflüsse wie Regen, Schnee oder Schmutz ausgeschlossen werden kann. Zur Zeit besteht dieser Transportschutz aus verschiedenen Wachsen, die nach Beendigung der Lackierarbeiten auf den Lack des Automobils aufgebracht werden. Nach Empfang des Automobils durch den Händler muß dieser die Wachsschicht durch ein relativ aufwendiges Entwachsungsverfahren wieder entfernen. Die dabei verwendeten Lösungsmittel stellen für den Händler darüber hinaus ein nicht unerhebliches Entsorgungsproblem dar.

Seit einiger Zeit besteht für den Automobilhändler die Möglichkeit, die Entwachsung des Automobils in sogenannten Entwachsungszentren durchführen zu lassen, wo die Entsorgung des dabei anfallenden Lösungsmittels sowie der Wachsreste günstiger durchgeführt werden kann. Die Entfernung der Wachsschicht in derartigen Entwachsungszentren ist jedoch für den Händler mit einem finanziellen und zeitlichen Mehraufwand verbunden, da er für den Transport zum Entwachsungszentrum und zurück sowie für die dabei entstehenden Kosten aufkommen muß. Darüber hinaus fallen auch bei dieser Möglichkeit erhebliche Mengen von Lösungsmitteln und Wachsresten an, die entsorgt werden müssen und daher auch zur Umweltbelastung beitragen.

Aus der Patentanmeldung DE-P 4223822.6 ist bekannt, dieses Problem dadurch zu lösen, daß man beim Transport vom Produzenten zum Händler eine haftende Oberflächenschutzfolie verwendet, die beim Händler leicht entfernt werden kann und als sortenreiner Kunststoff einer gezielten Wiederverwertung zugeführt werden kann. Durch die Verwendung einer haftenden Oberflächenschutzfolie entfällt die Entsorgung von Wachsresten oder Lösungsmittelabfällen. Als haftende Oberflächenschutzfolien werden dabei die in der Technik üblichen Folien eingesetzt, die sich auf eine Karosserie aufbringen lassen.

Die aus der DE-P 4223822.6 bekannten haftenden Oberflächenschutzfolien lassen sich in der Regel relativ leicht von der Karosserie des Automobils abziehen, hinterlassen aber häufig einen Kleberand auf der Karosserie, der noch entfernt werden muß. Darüber hinaus beobachtet man bei sehr hohen Temperaturen von mehr als 70°C gelegentlich Unebenheiten und Verwerfungen auf den von diesen haftenden Oberflächenschutzfolien bedeckten Lackoberflächen.

Der vorliegenden Erfindung lag daher die Aufgabe zugrunde, diesen Nachteilen abzuhelfen und eine Oberflächenschutzfolie zu entwickeln, die gegenüber der aus der DE-P 4223822.6 bekannten Oberflächenschutzfolie noch verbesserte Eigenschaften aufweist.

Diese Aufgabe wurde gelöst durch die Verwendung eines Copolymerisats aus C₂- bis C₁₀-α-Olefinen und 5 bis 80 Gew.-%, bezogen auf das Copolymerisat, von ungesättigten, polaren Comonomeren als haftende Oberflächenschutzfolie beim Transport von Automobilen. Diese Oberflächenschutzfolie übernimmt dabei die Schutzfunktion des Wachses während des Transportes des Automobils vom Produzenten zum Händler.

Die zu diesem Zweck verwendete haftende Oberflächenschutzfolie soll dabei zum einen auf der Lackschicht des Automobils auch bei erhöhten mechanischen Belastungen wie beispielsweise starken Luftströmungen beim Transport auf Lastwagen oder Eisenbahnwaggons noch gut haften und zum anderen zugleich als Schutzschicht gegen mechanische Beschädigungen und Umwelteinflüsse wie Regen, Schnee, Hagel oder Schmutz dienen.

Vorzugsweise wird dabei eine solche haftende Oberflächenschutzfolie verwendet, die aus einem Copolymerisat aus α-Olefinen besteht und 10 bis 60 Gew.-%, bezogen auf das Copolymerisat an ungesättigten, polaren Comonomeren enthält.

Unter der Bezeichnung α-Olefine sollen dabei insbesondere C₂- bis C₁₀-α-Olefine wie beispielsweise Ethylen, Propylen, But-l-en, Pent-l-en, Hex-l-en, Hept-l-en oder Oct-l-en verstanden werden, wobei bevorzugt Copolymerisate von Ethylen, Propylen und But-l-en verwendet werden. Die Bezeichnung α-Olefine soll dabei auch Isobutylen umfassen. Die α-Olefine können sowohl einzeln oder auch als Gemische miteinander in dem erfindungsgemäß zu verwendenden Copolymerisat zusammen mit dem ungesättigten, polaren Comonomeren eingesetzt werden. α-Olefine, die besonders gut als Gemische verwendet werden können, sind insbesondere Ethylen, Propylen und But-l-en.

Unter dem Begriff ungesättigte, polare Comonomere fallen in diesem Zusammenhang vor allem Comonomere wie Vinylacetat, Vinylchlorid, Acrylnitril, sowie ungesättigte Carbonsäuren, beispielsweise Maleinsäure, Fumarsäure, Acrylsäure, Methacrylsäure oder Glutarsäure. Als ungesättigte, polare Comonomere können dabei auch die entsprechenden Anhydride, Ester, Amide, Imide und Säurehalogenide dieser Säuren verwendet werden.

Für die erfindungsgemäße Verwendung eignen sich insbesondere Copolymerisate des Ethylens mit 15 bis 60 Gew.-%, bevorzugt mit 30 bis 50 Gew.-% an Vinylacetat als Comonomer. Derartige Copolymerisate aus Ethylen und Vinylacetat sind beispielsweise unter dem Handelsnamen Lupolen V® von der BASF Aktiengesellschaft erhältlich.

Die Herstellung der Copolymerisate aus C₂- bis C₁₀-α-Olefinen und ungesättigten, polaren Comonomeren erfolgt mit den in der Technik üblichen Copolymerisationsverfahren, beispielsweise durch Hochdruckcopolymerisation mit Hilfe radikalisch zerfallender Initiatoren, durch Copolymerisation mit Ziegler- bzw. mit Ziegler-Natta-Katalysatoren oder mit Phillips-Katalysatoren, oder aber durch Copolymerisation mit metallocenhaltigen Katalysatoren. Die Copolymerisation kann dabei in der Gasphase, in Lösung oder in einer Suspension sowohl kontinuierlich als auch diskontinuierlich durchgeführt werden. Derartige Herstellungsverfahren sind dem in der Kunststofftechnik arbeitenden Fachmann bekannt.

Die für die erfindungsgemäße Verwendung geeigneten Copolymerisate können ferner noch übliche Füllstoffe wie beispielsweise Talkum, Schwerspat oder Kaolin sowie gebräuchliche Additive wie beispielsweise Antioxidantien oder UV-Stabilisatoren, z.B. Ruß, enthalten.

Aus derartigen Copolymerisaten können die entsprechenden Folien u.a. in Kalandern oder Extrudern nach dem Blas- oder Breitschlitzfolien-Verfahren bei einer Temperatur von 170 bis 240°C, einem Druck von 250 bis 400 bar und einer mittleren Durchlaufzeit von 5 bis 20 min. hergestellt werden. Weitere übliche Verfahren zur Herstellung der haftenden Oberflächenschutzfolie sind u.a. das Beschichtungsverfahren und das Kaschierverfahren.

Beim Beschichtungsverfahren beispielsweise wird zunächst die zu verwendende Beschichtungsmasse auf eine Trägerbahn aufgetragen, anschließend werden die Arbeitsgänge Gelieren, Kühlen, Abziehen und Aufwickeln durchgeführt. Bei der eigentlichen Coextrusionsbeschichtung wird in einer Beschichtungsanlage mit einem Schmelzefilm, der in einem Extruder aufgeschmolzen und über eine Breitschlitzdüse ausgetragen wird und aus einem oder mehreren Polymerschichten bestehen kann, beschichtet. Der dabei entstehende Verbund wird anschließend in einer Kühl-Anpreßwalzen-Einheit abgekühlt und geglättet. Danach erfolgt die Aufwicklung der Verbundbahn in einer entsprechenden Wickelstation.

Beim Kaschierverfahren werden analog dem Beschichtungsverfahren ebenfalls die Arbeitsgänge Auftragen der Beschichtungsmasse auf die Trägerbahn, Glätten und Kühlen, Abziehen und Aufwickeln durchgeführt. Bei der eigentlichen Extrusionskaschierung läßt man eine vorgefertigte Trägerbahn in einen Glättwerkwalzenstuhl, der 4 Walzen aufweist, einlaufen. Dabei wird die Trägerbahn vor dem ersten Walzenspalt mit einem Schmelzefilm, der in einem Extruder aufgeschmolzen und über eine Breitschlitzdüse ausgetragen wird, beschichtet. Vor dem zweiten Walzenspalt läßt man eine zweite vorgefertigte Bahn zulaufen. Der dabei entstehende Gesamtverbund wird beim Durchlauf durch den zweiten Walzenspalt geglättet, anschließend gekühlt, abgezogen und in einer Wickelstation aufgewickelt.

Nach dem Blas-/Breitschlitz-Extrusionsverfahren werden allgemein zunächst verschiedene Polymere in unterschiedlichen Extrudern unter geeigneten Bedingungen aufgeschmolzen und anschließend in Form der Schmelzeströme unter Ausformen eines Mehrschichten-Schmelzestroms im Extrusionswerkzeug zusammengeführt. Danach erfolgt das Austragen, Abziehen und Abkühlen der Mehrschichtenschmelzebahn und das Aufwickeln des Verbundes. Auf diese Weise erhält man eine Verbundfolie. Das Breitschlitz-Extrusionsverfahren wird dabei bevorzugt angewandt.

Derartige Verfahren werden bei Temperaturen von 170 bis 300°C, Drücken von 250 bis 400 bar und mittleren Durchlaufzeiten von 5 bis 20 min. üblicherweise durchgeführt. Da die Copolymerisate in der Schmelze und in der Folie eine hohe Klebneigung zu allen Kontaktflächen aufweisen, werden die für die Herstellung der Verbunde eingesetzten Walzen sowie die Abzugswalzen mit einem gegenüber den Copolymerisaten antiadhäsiven Material, z.B., mit Polytetrafluorethylen beschichtet. Hierdurch lassen sich u.a. für das einwandfreie Wickeln der Verbunde entsprechende Bahnspannungen einhalten.

Die auf diese Weise erhältlichen haftenden Oberflächenschutzfolien lassen sich erfindungsgemäß zum Transport von Automobilen verwenden. Das Aufbringen der haftenden Oberflächenschutzfolie auf die Lackschicht des Automobils kann dabei sowohl von Hand durch leichtes Aufpressen der Folie, als auch durch Einsatz von rotierenden Folienwalzen erfolgen, die ähnlich wie die in Autowaschstraßen gebräuchlichen Walzen langsam über das Automobil bewegt werden. Anschließend kann gegebenenfalls die Folie durch thermische Behandlung kurzzeitig angeschmolzen werden, um dadurch eine vollständige, alle Oberflächenrauhigkeiten abdeckende Schutzschicht zu erhalten. Die Unterseite des Automobils bleibt dabei ebenso wie der Bereich der Räder von der Oberflächenschutzfolie frei. Weiterhin können die vertikalen Seitenflächen des Automobils, beispielsweise im Seitentürenbereich, von der haftenden Oberflächenschutzfolie ganz oder zumindest teilweise ausgespart werden. Auf diese Weise wird das Aufbringen der haftenden Oberflächenschutzfolie erleichtert. Darüber hinaus kann es sich empfehlen, den Bereich der Frontscheibe des Automobils von der Oberflächenschutzfolie auszusparen, um auf diese Weise kurze Fahrten des mit der haftenden Oberflächenschutzfolie bedeckten Automobils, beispielsweise vom Autotransporter zum Händler, zu ermöglichen.

Weiterhin ist es möglich, die haftende Oberflächenschutzfolie im Bereich der Fahrertür des Automobils mit einem durch eine Perforation leicht von der übrigen Oberflächenschutzfolie entfernbaren Bereich zu versehen, was ein leichtes Einsteigen in das Automobil ohne größere Beschädigung der Folie ermöglicht. Derartige Perforationen werden üblicherweise durch das In-Line-Perforations-Verfahren auf Folien aufgebracht. Darüber hinaus kann die Fahrertür des Automobils auch mit einer eigenen haftenden Oberflächenschutzfolie getrennt vom übrigen Automobil versehen werden.

Vorzugsweise kann auf die haftende Oberflächenschutzfolie, die direkt auf der Karosserie des Automobils liegen soll, noch mindestens eine weitere Schutzschicht aufgebracht werden.

Die Hauptaufgabe der auf der haftenden Oberflächenschutzfolie zusätzlich aufgebrachten Schutzschicht besteht im wesentlichen darin, gegenüber starken Umwelteinflüssen wie beispielsweise Regen oder Schneefall möglichst unempfindlich zu sein und darüber hinaus Belastungen wie Schmutz oder chemische und mechanische Einwirkungen von der Lackschicht fernzuhalten. Als Schutzschichten können insbesondere thermoplastische Polymere wie beispielsweise Polyamide, Polystyrol, Polyester, Polycarbonate oder Polyolefine eingesetzt werden. Bevorzugt werden dabei Schutzschichten aus Polyolefinen verwendet, beispielsweise aus Ethylenhomopolymerisaten, Propylenhomopolymerisaten oder aus statistischen Propylen-Ethylen-Copolymerisaten. Die Herstellung derartiger Polyolefine kann durch die dem Fachmann geläufigen Polymerisationsarten erfolgen, beispielsweise durch Ziegler-Natta-Polymerisation, durch Polymerisation mit Hilfe von Phillips-Katalysatoren, durch Hochdruckpolymerisation oder durch Polymerisation mit Hilfe von metallocenhaltigen Katalysatoren. Aus diesen Polyolefinen können die entsprechenden Schutzfolien analog den haftenden Oberflächenschutzfolien u.a. nach dem Blas- oder Breitschlitzfolien-Verfahren hergestellt werden.

Die als Schutzschicht dienende Folie kann nach ihrer Herstellung durch möglichst flächengleiches Auftragen auf die haftende Oberflächenschutzfolie aufgebracht werden. Derartige Herstellungsverfahren für mehrschichtige Folien erfolgen üblicherweise nach dem Beschichtungsverfahren, dem Kaschierverfahren oder dem Blas-/Breitschlitz-Coextrusionsverfahren. Die Schutzschicht kann weiterhin übliche Additive, beispielsweise UV-Stabilisatoren, z.B. Ruß oder Antioxidantien enthalten. Es können auch Füllstoffe wie Talkum, Kaolin oder Schwerspat mitverwendet werden.

Bei erfindungsgemäßer Verwendung der haftenden Oberflächenschutzfolie kann der Transport von Automobilen vom Produzenten zum Händler leichter und umweltfreundlicher durchgeführt werden. Durch die Haftung der Folie auf der Karosserie des Automobils wird ein Aufblähen der Folie beim auftretenden Fahrtwind vermieden, so daß eine Beschädigung der Folie beim Transport unterbleibt. Beim Händler kann die haftende Oberflächenschutzfolie anschließend ohne aufwendigen Entwachsungsvorgang durch einfaches Abziehen vom Automobil entfernt werden.

Eine Nachbehandlung der Karosserie des Automobils mit Wasser oder chemischen Lösungsmitteln erübrigt sich ebenso wie die Entsorgung von Wachsresten oder Lösungsmittelabfällen. Die haftende Oberflächenschutzfolie kann platzsparend aufgewickelt und als sortenreine Kunststoffolie ohne weiteren Trennvorgang einer gezielten Wiederverwertung zugeführt werden.

Die erfindungsgemäße Verwendung eines Copolymerisats aus C₂- bis C₁₀-α-Olefinen und ungesättigten, polaren Comonomeren als haftende Oberflächenschutzfolie ermöglicht es u.a., die Folie von der Karosserie so zu entfernen, daß kein Kleberand auf der Karosserie zurückbleibt. Darüber hinaus läßt sich eine derartige haftende Oberflächenschutzfolie auch noch bei sehr hohen Temperaturen von mehr als 70°C anwenden, ohne daß dabei Unebenheiten oder Verwerfungen auf der von der Folie bedeckten Lackoberfläche auftreten.

In diesem Zusammenhang ist es insbesondere wichtig, entsprechend der erfindungsgemäßen Verwendung solche Copolymerisate einzusetzen, deren Gehalt an ungesättigten, polaren Comonomeren, bezogen auf das Copolymerisat, bei 5 bis 80 Gew.-%, insbesondere bei 10 bis 60 Gew.-% liegt. Beträgt der Gehalt an ungesättigten, polaren Comonomeren weniger als 5 Gew.-%, so beobachtet man häufig Verformungen oder Verwerfungen der haftenden Oberflächenschutzfolie, die zur Beeinflußung der Lackoberfläche führen. Bei einem Comoncmerengehalt von mehr als 80 Gew.-% ist es dagegen häufig sehr schwierig, die haftende Oberflächenschutzfolie von der Karosserie zu entfernen.

Die Verwendung einer haftenden Oberflächenschutzfolie zum Transport von Automobilen ist für alle gebräuchlichen Fahrzeugtypen denkbar. Neben Personenkraftwagen eignen sich dafür u.a. auch Kleinbusse, kleinere Lastkraftwagen, Campingwagen, Geländefahrzeuge und Nutzfahrzeuge.

### Beispiele 1 und 2 und Vergleichsbeispiel A

Die nachfolgenden Beispiele 1 und 2 und das Vergleichsbeispiel A sollen die erfindungsgemäße Verwendung der haftenden Oberflächenschutzfolie näher erläutern.

### Beispiel 1

In Beispiel 1 wurde eine Oberflächenschutzfolie verwendet, die aus einer Ethylen-Vinylacetat-Monofolie mit 33 Gew.-% Vinylacetat und einem beigemischten Ruß-Additiv (2 Gew.-%) besteht.

Die Oberflächenschutzfolien wurden mit Hilfe einer Andruckrolle blasenfrei auf die Lackoberfläche mehrerer Bleche mit schwarzem, rotem, grünem oder pinkfarbenem Lack aufgebracht und anschließend in einem Wärmeofen angeschmolzen, um eine optimale Beschichtung der Lackoberfläche bis in den Bereich ihrer Mikrorauhigkeiten zu erreichen.

Die Schälfestigkeiten der Oberflächenschutzfolien-Blechverbunde wurden anschließend bei verschiedenen Temperaturen getestet. Darüber hinaus wurden die Lackoberflächen nach Abzug der Folien auf Oberflächenveränderungen und Kleberablagerungen hin visuell, mittels eines Lichtmikroskops sowie mittels Oberflächen-Infrarotspektroskopie untersucht.

Die aus der Oberflächenschutzfolie und dem mit einer Lackschicht versehenen Blech bestehenden Verbunde wurden über einen Zeitraum von insgesamt 7 Tagen bei -15°C (im Kälteschrank), bei 23°C und 54 % relativer Luftfeuchte und jeweils bei den Temperaturen 60, 70 und 80°C (im Wärmeschrank) untersucht.

Die Prüfung auf Schälfestigkeit der einzelnen Proben erfolgte dabei mit Hilfe einer Zugprüfmaschine bei einer Prüfgeschwindigkeit von 100 mm/min und einem Probenformat von 15∗145 mm. Die Proben lagen also in Form von schmalen Streifen vor. Bei der Prüfung wurden die Folienstreifen manuell über eine Länge von 15 mm von der Lackoberfläche des Bleches abgezogen. An diese Streifenbreite wurde ein speziell für diesen Einsatzzweck geeignetes, ausreichend langes Klebeband (ohne meßbare Eigendehnung innerhalb des vorgegebenen Prüfbereiches) angebracht.

Im nächsten Schritt wurde das Blech vertikal in die Klemmvorrichtungen der Maschine eingespannt; wobei der Bereich des Bleches, von dem die Folie über 15 mm abgezogen worden war, direkt zwischen die unteren Klemmbacken eingespannt wurde. Zwischen die oberen Klemmbacken wurde das freie Ende des aufgebrachten Klebebandes eingespannt.

Mit dieser Anordnung konnten bei der anschließend durchgeführten Zugprüfung die Folienstreifen, unter Beibehaltung eines konstanten Schälwinkels, von den Blechen abgezogen werden und in einem Weg-Kraft-Diagramm der Verlauf der Schälfestigkeit/Streifen aufgezeichnet werden.

Die Zugprüfungen wurden für alle Probestücke unter Raumtemperaturbedingungen (23°C, 54 % relative Luftfeuchte) durchgeführt.

Weiterführend zu diesen Versuchen wurde auf den Gepäckträger eines Personenkraftwagens die oben erwähnten Oberflächenschutzfolien-Blechverbunde so befestigt, daß sie bei Fahrten den Kräften des Fahrtwindes und den natürlichen Umgebungseinflüssen ausgesetzt waren. Die Folien wurden dabei analog mittels einer Anpreßwalze auf das Blech aufgebracht und anschließend erwärmt. Die mit der Oberflächenschutzfolie beschichteten Bleche wurden horizontal auf den Gepäckträger fixiert. Die auf diese Weise eingesetzten Verbunde wurden nun 14 Tage lang bei unterschiedlichen Witterungseinflüssen und Fahrtwindgeschwindigkeiten von bis zu 120 km/h auf ihre Eignung getestet.

Die Verbunde überstanden diese Prüfungen ohne sichtbare Beschädigungen. Bei keinem Probenteil löste sich die Oberflächenschutzfolie von der Lackoberfläche ab.

Bei den durchgeführten Versuchen zeigte sich, daß die verwendeten Oberflächenschutzfolien sowohl bei Temperaturen von -15°C, bei 23°C als auch im Temperaturbereich von 60 bis 80°C auf den Lackoberflächen keinerlei mechanische Schäden zurückließen, unabhängig von der Art des verwendeten Lackes. Darüber hinaus wurden an den Lackoberflächen keine Oberflächenveränderungen oder Kleberablagerungen festgestellt.

### Beispiel 2

Analog zum Beispiel 1 wurden im Beispiel 2 Coextrusionsfolien aus einer Haftschicht aus einem Ethylen-Vinylacetat-Copolymer mit 33 Gew.-% Vinylacetat und einer Schutzschicht aus einem Ethylenhomopolymerisat verwendet.

Die Folien wurden den gleichen Prüfungen wie im Beispiel 1 unterzogen.

Die aus den Versuchsauswertungen resultierenden Ergebnisse sind mit den Ergebnissen des Beispiels 1 identisch.

### Vergleichsbeispiel A

Im Vergleichsbeispiel A hingegen wurden Oberflächenschutzfolien verwendet, die aus einer Haftschicht aus einem natürlich vernetzten Kautschukkleber und einer darauf angebrachten Schutzschicht aus einem Ethylenhomopolymerisat bestanden.

Im Unterschied zu den Beispielen 1 und 2 wurden diese Folien jedoch nicht in einem Wärmeofen aufgeschmolzen, da damit die Struktur der Kleberschicht negativ verändert worden wäre.

Auch diese Folien wurden, wie im Beispiel 1 beschrieben, verschiedenen Eignungsprüfungen unterzogen.

Im Gegensatz zu den Ergebnissen der erfindungsgemäßen Beispiele 1 und 2 blieben nach dem Abziehen der Folien auf der Lackoberfläche Kleberänder übrig, die eine Nachbearbeitung und damit einen weiteren Arbeitsschritt erforderlich machten.

Weiterhin wurde bei den Folienstreifen eine größere und ungleichmäßigere Verzugsneigung festgestellt. Hierdurch bedingt können Teilablösungen der Folien von der Lackoberfläche resultieren, wodurch ein umfassender Oberflächenschutz der Lacke nicht mehr voll gewährleistet werden kann.

## Patentansprüche

1. Verwendung eines Copolymerisats aus C₂- bis C₁₀-α-Olefinen und 5 bis 80 Gew.-%, bezogen auf das Copolymerisat, von ungesättigten, polaren Comonomeren als haftende Oberflächenschutzfolie beim Transport von Automobilen.

2. Verwendung nach Anspruch 1, wobei das Copolymerisat 10 bis 60 Gew.-%, bezogen auf das Copolymerisat an ungesättigten, polaren Comonomeren enthält.

3. Verwendung nach den Ansprüchen 1 oder 2, wobei das Copolymerisat aus Ethylen und zu 15 bis 60 Gew.-%, bezogen auf das Copolymerisat, aus Vinylacetat als Comonomer besteht.

4. Verwendung nach den Ansprüchen 1 bis 3, wobei der Bereich der vertikalen Seitenflächen des Automobils von der Oberflächenschutzfolie ganz oder zumindest teilweise ausgespart wird.

5. Verwendung nach den Ansprüchen 1 bis 4, wobei der Bereich der Frontscheibe des Automobils von der Oberflächenschutzfolie ausgespart wird.

6. Verwendung nach den Ansprüchen 1 bis 5, wobei die Oberflächenschutzfolie im Bereich der Fahrertür des Automobils einen durch eine Perforation leicht von der übrigen Oberflächenschutzfolie entfernbaren Bereich aufweist.

7. Verwendung nach den Ansprüchen 1 bis 6, wobei die Fahrertür des Automobils mit einer eigenen haftenden Oberflächenschutzfolie getrennt vom übrigen Automobil versehen wird.

8. Verwendung nach den Ansprüchen 1 bis 7, wobei auf der haftenden Oberflächenschutzfolie noch mindestens eine weitere Schutzschicht aufgebracht ist.

9. Verwendung nach den Ansprüchen 1 bis 8, wobei die auf der haftenden Oberflächenschutzfolie aufgebrachte weitere Schutzschicht aus Polyolefinen besteht.

## Claims

1. Use of a copolymer of C₂-C₁₀-α-olefins and from 5 to 80% by weight, based on the copolymer, of unsaturated, polar comonomers as an adhesive surface protective film in the transport of automobiles.

2. Use as claimed in claim 1, wherein the copolymer contains from 10 to 60% by weight, based on the copolymer, of unsaturated, polar comonomers.

3. Use as claimed in claim 1 or 2, wherein the copolymer consists of ethylene and from 15 to 60% by weight, based on the copolymer, of vinyl acetate as the comonomer.

4. Use as claimed in any of claims 1 to 3, wherein the region of the vertical lateral surfaces of the automobile is completely or partly free from the surface protective film.

5. Use as claimed in any of claims 1 to 4, wherein the region of the windscreen of the automobile is free from the surface protective film.

6. Use as claimed in any of claims 1 to 5, wherein, in the region of the driver's door of the automobile, the surface protective film has an area which may be readily removed from the remaining surface protective film owing to perforations.

7. Use as claimed in any of claims 1 to 6, wherein the driver's door of the automobile is provided with its own adhesive surface protective film, separate from the remaining automobile.

8. Use as claimed in any of claims 1 to 7, wherein at least one further protective layer is applied to the adhesive surface protective film.

9. Use as claimed in any of claims 1 to 8, wherein the further protective layer applied to the adhesive surface protective film consists of polyolefins.

## Revendications

1. Utilisation d'un copolymère d'α-oléfines en C2-C10 et de 5 à 80 % en poids, sur le poids du copolymère, de comonomères polaires insaturés en tant que feuille adhérente, protégeant les surfaces, pour le transport des automobiles.

2. Utilisation selon la revendication 1, dans laquelle le copolymère contient 10 à 60 % de son poids de comonomères polaires insaturés.

3. Utilisation selon les revendications 1 ou 2, dans laquelle le copolymère consiste en éthylène et 15 à 60 % de son poids d'acétate de vinyle en tant que comonomère.

4. Utilisation selon les revendications 1 à 3, dans laquelle la région des surfaces latérales verticales de l'automobile, en totalité ou en partie au moins, n'est pas recouverte par la feuille de protection des surfaces.

5. Utilisation selon les revendications 1 à 4, dans laquelle la région du pare-brise de l'automobile n'est pas recouverte par la feuille protégeant les surfaces.

6. Utilisation selon les revendications 1 à 5, dans laquelle, dans la région de la portière conducteur de l'automobile, la feuille de protection porte une perforation qui permet une séparation facile d'avec le reste de la feuille de protection.

7. Utilisation selon les revendications 1 à 6, dans laquelle la portière conducteur de l'automobile porte sa propre feuille adhérente de protection de surface, séparément des autres parties de l'automobile.

8. Utilisation selon les revendications 1 à 7, dans laquelle, sur la feuille adhérente de protection des surfaces, on applique encore au moins une autre couche de protection.

9. Utilisation selon la revendication 8, dans laquelle l'autre couche de protection appliquée sur la feuille adhérente de protection des surfaces consiste en polyoléfine.
